(19) Europäisches Patentamt
European Patent Office
Office européen des brevets

(11) EP 3 978 270 B1

(12) EUROPEAN PATENT SPECIFICATION

(45) Date of publication and mention of the grant of the patent:
**19.08.2026 Bulletin 2026/34**

(21) Application number: **20833149.6**

(22) Date of filing: **07.01.2020**

(51) International Patent Classification (IPC):
***B60C 1/00*** *(2006.01)* ***C08L 15/00*** *(2006.01)*
***B60C 11/00*** *(2006.01)*

(52) Cooperative Patent Classification (CPC):
(C-Sets available)
**B60C 11/005; B60C 1/0016; B60C 11/0008; C08C 19/02; C08C 19/22; C08C 19/25; C08F 236/06; C08F 236/10; C08L 9/00; C08L 9/06; C08L 15/00;** Y02T 10/86 (Cont.)

(86) International application number:
**PCT/JP2020/000166**

(87) International publication number:
**WO 2020/261618 (30.12.2020 Gazette 2020/53)**

(54) **PNEUMATIC TIRE**

LUFTREIFEN

BANDAGE PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2019 JP 2019118815**

(43) Date of publication of application:
**06.04.2022 Bulletin 2022/14**

(73) Proprietor: **Sumitomo Rubber Industries, Ltd.**
**Kobe-shi, Hyogo 651-0072 (JP)**

(72) Inventors:
- **KATO, Fumiya**
**Kobe-shi, Hyogo 651-0072 (JP)**
- **MUKOGUCHI, Daiki**
**Kobe-shi, Hyogo 651-0072 (JP)**

(74) Representative: **Manitz Finsterwald**
**Patent- und Rechtsanwaltspartnerschaft mbB**
**Ganghoferstraße 29**
**80339 München (DE)**

(56) References cited:
**EP-A1- 2 818 332**
**EP-A1- 3 342 604**
**EP-A1- 3 552 840**
**WO-A1-2018/110409**
**WO-A1-2018/143272**
**JP-A- 2016 113 560**
**JP-A- 2016 120 915**
**JP-A- 2018 083 884**
**JP-B2- H0 117 064**

- **DATABASE WPI Week 201873, Derwent World Patents Index; AN 2018-85479D, XP002809381**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 236/06, C08F 4/48;**
**C08F 236/10, C08F 4/48;**
**C08L 9/00, C08K 3/04, C08K 3/36, C08K 5/548, C08L 15/00;**
**C08L 9/06, C08K 3/04, C08K 3/36, C08K 5/548, C08L 9/00, C08L 15/00;**
**C08L 15/00, C08K 3/04, C08K 3/36, C08K 5/548, C08L 9/00, C08L 9/06;**
C08F 236/06, C08F 212/08

## Description

TECHNICAL FIELD

The present disclosure relates to a pneumatic tire.

BACKGROUND ART

With the recent increase in concern about environmental issues, the demand for fuel efficient automobiles has been increasing. There is also a need for rubber compositions for automotive tires having excellent fuel economy. Patent Literature 1, for example, discloses a method for improve fuel economy by incorporating a hydrogenated copolymer. Patent Literature 2 describes a tire having a cap tread which may optionally include a hydrogenated styrene butadiene rubber.

CITATION LIST

PATENT LITERATURE

Patent Literature 1: WO 2016/039005
Patent Literature 2: EP 3 552 840 A1

SUMMARY OF DISCLOSURE

TECHNICAL PROBLEM

Diene rubbers used in general rubber compositions for tires usually tend to exhibit reduced tensile strength when they are subjected to oxidation of their double bonds due to ozone degradation. In contrast, hydrogenated copolymers having fewer double bonds than diene rubbers will be less likely to undergo a reduction in tensile strength due to ozone degradation.

However, rubber compositions containing a large amount of hydrogenated copolymers tend to co-cure poorly with adjacent components containing no hydrogenated copolymers. Thus, when such a rubber composition is used in a cap tread, for example, the adhesive strength between the cap tread and a base tread may be reduced so that they can be separated at their interface, resulting in reduced tire durability.

The present disclosure aims to solve the above problem and provide a pneumatic tire excellent in durability and ozone resistance.

SOLUTION TO PROBLEM

The present disclosure relates to a pneumatic tire, including a tread portion including a stack of a cap tread and a base tread, wherein the cap tread and the base tread include a cap tread rubber composition and a base tread rubber composition, respectively, and an adhesive strength between the cap and base tread rubber compositions is 9 MPa or higher, wherein the cap tread rubber composition has a thermal aging-induced hardness change defined by the following equation (A) of 3 or less:

(A) Thermal aging-induced hardness change = Hardness after thermal treatment - Hardness before thermal treatment wherein each Hardness represents a JIS-A hardness at 25°C of the cap tread rubber composition, and the thermal treatment involves allowing the cap tread rubber composition to stand at a temperature of 90°C and an oxygen concentration of 20% for 336 hours. At least one rubber component in the cap tread rubber composition comprises at least one hydrogenated copolymer containing an aromatic vinyl portion which is a structural unit derived from an aromatic vinyl compound, and a conjugated diene portion which is a structural unit derived from a conjugated diene compound and has a degree of hydrogenation of 75 mol% or higher, and the weight average molecular weight of the hydrogenated copolymer is 200,000 or more, when determined by gel permeation chromatography calibrated with polystyrene standards.

Preferably, the cap tread rubber composition contains, based on 100% by mass of the at least one rubber component, 25 to 60% by mass of the at least one hydrogenated copolymer.

Preferably, at least one rubber component in the cap tread rubber composition contains at least one modified styrene-butadiene rubber.

ADVANTAGEOUS EFFECTS OF DISCLOSURE

The pneumatic tire of the present disclosure includes a cap tread rubber composition and a base tread rubber composition wherein the adhesive strength between the cap and base tread rubber compositions is 9 MPa or higher, and the cap tread rubber composition has a thermal aging-induced hardness change defined by equation (A) of 3 or less. Thus, the pneumatic tire provides excellent durability and excellent ozone resistance.

DESCRIPTION OF EMBODIMENTS

The pneumatic tire of the present disclosure includes a tread portion including a stack of a cap tread and a base tread, wherein the cap tread and the base tread include a cap tread rubber composition and a base tread rubber composition, respectively, and the adhesive strength between the cap and base tread rubber compositions is 9 MPa or higher, wherein the cap tread rubber composition has a thermal aging-induced hardness change defined by the following equation (A) of 3 or less:

(A) Thermal aging-induced hardness change = Hardness after thermal treatment - Hardness before thermal treatment wherein each Hardness represents the JIS-A hardness at 25°C of the cap tread rubber composition, and the thermal treatment involves allowing the cap tread rubber composition to stand at a temperature of 90°C and an oxygen concentration of 20% for 336 hours.

In the pneumatic tire in which the adhesive strength between the cap and base tread rubber compositions is 9 MPa or higher, the adhesion strength between the cap tread and the base tread can be sufficiently ensured.

Moreover, diene rubbers usually tend to exhibit reduced tensile strength due to ozone degradation, as described earlier. In contrast, the pneumatic tire has high ozone resistance and is less likely to undergo a reduction in tensile strength since the cap tread rubber composition has a thermal aging-induced hardness change defined by equation (A) of 3 or less. Because of the above-mentioned actions, it is believed that the pneumatic tire provides excellent durability and excellent ozone resistance.

It is sufficient that the adhesive strength between the cap and base tread rubber compositions be 9 MPa or higher, preferably 13 MPa or higher, more preferably 15 MPa or higher. The upper limit is not limited but is usually 30 MPa or lower. When the adhesive strength is within the range indicated above, the advantageous effect tends to be better achieved.

The adhesive strength is measured by subjecting a strip-shaped sample to a peeling test in accordance with JIS K6256-1:2013 at a tensile rate of 50 mm/min and a temperature of 23°C. The sample used is prepared by sandwiching a PET film having a 1 cm square hole between a 2 mm-thick sheet of an unvulcanized cap tread rubber composition and a 2 mm-thick sheet of an unvulcanized base tread rubber composition, and vulcanizing the stack at 170°C for 12 minutes to allow the sheets to adhere only at the hole in the PET film.

The adhesive strength between the cap and base tread rubber compositions can be adjusted by the formulations (in particular, the type and amount of the rubber component(s)) of the compositions.

<Cap tread rubber composition>

It is sufficient that the cap tread rubber composition have a thermal aging-induced hardness change defined by the following equation (A) of 3 or less. In view of durability, the thermal aging-induced hardness change is preferably 2 or less, more preferably 1 or less, and may be 0 (the hardnesses are substantially the same).

(A) Thermal aging-induced hardness change = Hardness after thermal treatment - Hardness before thermal treatment wherein each Hardness represents the JIS-A hardness at 25°C of the cap tread rubber composition, and the thermal treatment involves allowing the cap tread rubber composition to stand at a temperature of 90°C and an oxygen concentration of 20% for 336 hours.

The cap tread rubber composition having a thermal aging-induced hardness change of 3 or less is achieved by using a (co)polymer having a few double bonds as a rubber component. The (co)polymer is a hydrogenated copolymer containing an aromatic vinyl portion which is a structural unit derived from an aromatic vinyl compound, and a conjugated diene portion which is a structural unit derived from a conjugated diene compound and has a degree of hydrogenation of 75 mol% or higher.

The hydrogenated copolymer may be obtained by adding hydrogen to a copolymer of an aromatic vinyl

compound and a conjugated diene compound. It is believed that such a hydrogenated copolymer has a few double bonds and is thus less likely to be affected by thermal degradation or ozone degradation. Moreover, it is believed that the uniformity of the crosslink density is improved during the degradation or ozone degradation, resulting in a decrease in thermal aging-induced hardness change.

Examples of the aromatic vinyl compound include styrene, $\alpha$-methylstyrene, 1-vinylnaphthalene, 3-vinyltoluene, ethylvinylbenzene, divinylbenzene, 4-cyclohexylstyrene, and 2,4,6-trimethylstyrene. These compounds may be used alone, or two or more of these may be used in combination. Preferred is styrene.

Examples of the conjugated diene compound include 1,3-butadiene, isoprene, 1,3-pentadiene, 2,3-dimethylbutadiene, 2-phenyl-1,3-butadiene, and 1,3-hexadiene. These compounds may be used alone, or two or more of these may be used in combination. Preferred are 1,3-butadiene and isoprene, with 1,3-butadiene being more preferred.

Thus, the hydrogenated copolymer is preferably a hydrogenated product of a copolymer of styrene and 1,3-butadiene, namely a hydrogenated styrene-butadiene copolymer (hydrogenated SBR). The hydrogenated styrene-butadiene copolymer is preferably a hydrogenated modified styrene-butadiene copolymer (hydrogenated modified SBR) which has been modified as described later.

For the hydrogenated copolymer, the aromatic vinyl compound and the conjugated diene compound may be copolymerized in any order. The copolymerization may be random copolymerization or block copolymerization, preferably random copolymerization.

It is sufficient that the conjugated diene portion of the hydrogenated copolymer have a degree of hydrogenation of 75 mol% or higher. In view of durability and ozone resistance, the degree of hydrogenation is preferably 80 mol% or higher, more preferably 90 mol% or higher, still more preferably 95 mol% or higher, and may be 100 mol%. Moreover, in view of adhesion to the base tread rubber composition, the degree of hydrogenation is preferably 95 mol% or lower, more preferably 90 mol% or lower, still more preferably 80 mol% or lower.

The degree of hydrogenation can be calculated from the rate of decrease in the unsaturated bond signals in the $^{1}$H-NMR spectrum measured.

The weight average molecular weight (Mw) of the hydrogenated copolymer is 200,000 or more, more preferably 300,000 or more, still more preferably 350,000 or more, particularly preferably 390,000 or more, but is preferably 2,000,000 or less, more preferably 1,000,000 or less, still more preferably 700,000 or less, particularly preferably 500,000 or less. When the Mw is within the range indicated above, the advantageous effect tends to be better achieved.

The weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards. Moreover, the Mw of copolymers having modifying groups should be measured before they are subjected to modification because otherwise accurate Mw measurements cannot be obtained due to the interaction between the modifying groups and the silica gel in the column.

The aromatic vinyl portion content (styrene content in the case of hydrogenated SBR) of the hydrogenated copolymer is preferably 10% by mass or higher, more preferably 20% by mass or higher, still more preferably 25% by mass or higher, but is preferably 50% by mass or lower, more preferably 40% by mass or lower, still more preferably 30% by mass or lower. When the content is within the range indicated above, the advantageous effect tends to be better achieved.

The aromatic vinyl portion content can be measured by $^{1}$H-NMR analysis.

The hydrogenated copolymer may be synthesized, for example as described below.

(Polymerization method)

The aromatic vinyl compound and the conjugated diene compound may be polymerized by any method, including solution polymerization, vapor phase polymerization, and bulk polymerization, with solution polymerization being particularly preferred. Moreover, the polymerization may be carried out in either a batchwise or continuous mode.

For solution polymerization, the monomer concentration (the total of styrene and 1,3-butadiene in the case of a styrene-butadiene copolymer) in the solvent is preferably 5% by mass or more, more preferably 10% by mass or more. If the monomer concentration in the solvent is less than 5% by mass, the copolymer yield tends to be small, resulting in an increased cost. The monomer concentration in the solvent is also preferably 50% by mass or less, more preferably 30% by mass or less. If the monomer concentration in the solvent is more than 50% by mass, the solution tends to become too viscous to stir easily, resulting in a difficulty in polymerization.

(Polymerization initiator in anionic polymerization)

For anionic polymerization, any polymerization initiator may be used. Preferred are organic lithium compounds. Preferred among the organic lithium compounds are those containing a C2-C20 alkyl group, such as ethyllithium, n-propyllithium, isopropyllithium, n-butyllithium, sec-butyllithium, tert-butyllithium, tert-octyllithium, n-decyllithium, phenyl-

lithium, 2-naphthyllithium, 2-butylphenyllithium, 4-phenylbutyllithium, cyclohexyllithium, cyclopentyllithium, and reaction products of diisopropenylbenzene and butyllithium. In view of availability, safety, and other aspects, n-butyllithium or sec-butyllithium is preferred among these.

Moreover, the polymerization reaction may be performed in the presence of a compound (R) obtained by mixing at least one of the organic lithium compounds mentioned above with a compound (B1) containing a functional group interactive with silica. In the polymerization in the presence of the compound (R), the functional group interactive with silica can be introduced into the polymerization initiating terminal of the copolymer. Thus, the resulting copolymer has a modified polymerization initiating terminal. The term "interactive" herein means that a covalent bond or an intermolecular force weaker than the covalent bond (e.g., electromagnetic forces between molecules such as ion-dipole interaction, dipole-dipole interaction, hydrogen bond, or van der Waals force) may be formed between molecules. The term "functional group interactive with silica" refers to a group having at least one atom interactive with silica such as a nitrogen atom, a sulfur atom, a phosphorus atom, or an oxygen atom.

The compound (R) is preferably a reaction product of an organic lithium compound and a nitrogen-containing compound such as a secondary amine compound, among others. Specific examples of the nitrogen-containing compound include dimethylamine, diethylamine, dipropylamine, dibutylamine, dodecamethyleneimine, N,N'-dimethyl-N'-trimethylsilyl-1,6-diaminohexane, piperidine, pyrrolidine, hexamethyleneimine, heptamethyleneimine, dicyclohexylamine, N-methylbenzylamine, di-(2-ethylhexyl)amine, diallylamine, morpholine, N-(trimethylsilyl)piperazine, N-(tertbutyldimethylsilyl)piperazine, and 1,3-ditrimethylsilyl-1,3,5-triazinane. The polymerization in the presence of the compound (R) may be carried out by preliminarily mixing an organic lithium compound with a compound (B1) to prepare a compound (R) and adding the compound (R) to the polymerization system, followed by polymerization. Alternatively, it may be carried out by adding an organic lithium compound and a compound (B1) to the polymerization system and mixing them in the polymerization system to prepare a compound (R), followed by polymerization.

(Method for anionic polymerization)

The production of the copolymer through anionic polymerization using the polymerization initiator may be performed by any method including conventionally known methods.

Specifically, monomers, for example, styrene and 1,3-butadiene may be anionically polymerized in an organic solvent inert to the reaction, for example, a hydrocarbon solvent (e.g., an aliphatic, alicyclic, or aromatic hydrocarbon compound) using a polymerization initiator such as butyllithium, optionally in the presence of a randomizer to produce a target copolymer such as a styrene-butadiene copolymer.

(Hydrocarbon solvent for anionic polymerization)

The hydrocarbon solvent is preferably a C3-C8 hydrocarbon solvent. Examples include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These solvents may be used alone, or two or more of these may be used in admixture.

(Randomizer for anionic polymerization)

The term "randomizer" refers to a compound that has the function of controlling the microstructure of the conjugated diene portion of a copolymer, for example, increase of 1,2-butadiene units or 3,4-isoprene units, or the function of controlling the compositional distribution of monomer units in a copolymer, for example, randomization of styrene and butadiene units in a styrene-butadiene copolymer. The randomizer is not limited, and any known compound commonly and conventionally used as a randomizer may be used. Examples include ethers and tertiary amines, such as dimethoxybenzene, tetrahydrofuran, dimethoxyethane, diethylene glycol dibutyl ether, diethylene glycol dimethyl ether, bistetrahydrofurylpropane, triethylamine, pyridine, N-methylmorpholine, N,N,N',N'-tetramethylethylenediamine, and 1,2-dipiperidinoethane. Other examples include potassium salts such as potassium-t-amylate and potassium-t-butoxide, and sodium salts such as sodium-t-amylate. Each of these randomizers may be used alone, or two or more of these may be used in combination. Moreover, the amount of the randomizer(s) used per mol of the organic lithium compound(s) is preferably 0.01 mole equivalents or more, more preferably 0.05 mole equivalents or more. If the amount of the randomizers is less than 0.01 mole equivalents, the added randomizer tends to produce a small effect, and randomization tends not to occur readily. The amount of the randomizer(s) per mol of the organic lithium compound(s) is also preferably 1,000 mole equivalents or less, more preferably 500 mole equivalents or less. If the amount of the randomizers is more than 1,000 mole equivalents, the reaction rate of monomers tends to change greatly, and the randomization tends to be adversely affected.

The Tg of the copolymer can be controlled by varying the type and amount of the randomizer(s) used. For

example, the Tg of the copolymer may be lowered by reducing the amount of tetrahydrofuran.

(Reaction temperature)

The anionic polymerization may be carried out at any reaction temperature at which the reaction suitably proceeds. Usually, the reaction temperature is preferably -10°C to 100°C, more preferably 25°C to 70°C.

(Modification step)

The active terminal of the copolymer obtained by the above polymerization step may be reacted with a compound (B2) containing a functional group interactive with silica to introduce the functional group interactive with silica into the polymerization terminating terminal of the copolymer. This step allows the copolymer to have a modified polymerization terminating terminal. The term "terminal" herein refers to an end portion of the molecular chain other than monomer-derived structures containing carbon-carbon double bonds.

The copolymer used in the modification reaction (hereinafter, also referred to as terminal modification reaction) may be any copolymer that has an active terminal with an unmodified or modified polymerization initiating terminal. Moreover, the compound (B2) may be any compound that contains a functional group interactive with silica and is reactable with the polymerization active terminal. Preferred specific examples of the compound (B2) include:

(I) a compound (B2-1) represented by the following formula (1):

$$\left(R^4-O\right)_{3-n}Si(R^3)_n-R^5-A^1 \quad (1)$$

wherein $A^1$ represents a monovalent functional group which contains no active hydrogen but contains at least one selected from the group consisting of a nitrogen atom, a phosphorus atom, and a sulfur atom, and which is bound to $R^3$ through a nitrogen atom, a phosphorus atom, or a sulfur atom; $R^3$ and $R^4$ each represent a hydrocarbyl group; $R^5$ represents a hydrocarbylene group; and n represents an integer of 0 to 2, provided that when two or more $R^3$ or $R^4$ groups are present, they may be the same or different;

(II) a compound (B2-2) that has, in the molecule, one or more functional groups (x1) of at least one type selected from the group consisting of a cyclic ether group, a (thio)carbonyl group, and an iso(thio)cyanate group, and one or more groups (x2) which are different from the functional groups (x1) and which contain no active hydrogen but contain at least one selected from the group consisting of a nitrogen atom, a phosphorus atom, an oxygen atom, and a sulfur atom, provided that at least one of the nitrogen, phosphorus, and sulfur atoms may be protected by a trisubstituted hydrocarbylsilyl group; and

(III) a compound (B2-3) having two or more iso(thio)cyanate groups in the molecule. Each of these compounds (B2) may be used alone, or two or more of these may be used in combination. Herein, the term "(thio)carbonyl group" refers to a carbonyl group and a thiocarbonyl group, and the term "iso(thio)cyanate group" refers to an isocyanate group and an isothiocyanate group.

The hydrocarbyl group for $R^3$ and $R^4$ in formula (1) is preferably a linear or branched C1-C20 alkyl group, a C3-C20 cycloalkyl group, or a C6-C20 aryl group.

$R^5$ is preferably a linear or branched C1-C20 alkanediyl group, a C3-C20 cycloalkylene group, or a C6-C20 arylene group.

Preferably, n is 0 or 1 to increase the reactivity with the copolymer.

$A^1$ contains at least one selected from the group consisting of a nitrogen atom, a phosphorus atom, and a sulfur atom (hereinafter, also referred to as a specific atom), and is bound to $R^5$ through the specific atom. The specific atom is bound to no active hydrogen, and may be protected by, for example, a trisubstituted hydrocarbylsilyl group. The term "active hydrogen" herein refers to a hydrogen atom bound to an atom other than a carbon atom, and preferably refers to a hydrogen atom having a bond energy lower than that of the carbon-hydrogen bond of polymethylene.

In particular, $A^1$ is preferably a group that can be converted to an onium ion by the action of an onium salt-forming agent. The compound (B2) containing such a group ($A^1$) can impart excellent shape-retaining properties to the copolymer to be modified.

Specific examples of $A^1$ include a nitrogen-containing group in which two hydrogen atoms of a primary amino group are substituted by two protecting groups; a nitrogen-containing group in which one hydrogen atom of a secondary amino group is substituted by one protecting group; a tertiary amino group; an imino group; a pyridyl group; a phosphorus-

containing group in which two hydrogen atoms of a primary phosphino group are substituted by two protecting groups; a phosphorus-containing group in which one hydrogen atom of a secondary phosphino group is substituted by one protecting group; a tertiary phosphino group; and a sulfur-containing group in which one hydrogen atom of a thiol group is substituted by one protecting group. Among these, groups containing a nitrogen atom are preferred because of their good affinity for silica. The term "protecting group" refers to a functional group that converts $A^1$ to a functional group inert to the polymerization active terminal, such as, for example, a trisubstituted hydrocarbylsilyl group.

Specific examples of the compound (B2-1) are described below. Examples of compounds containing an alkoxysilyl group and a nitrogen-containing group in which two hydrogen atoms of a primary amine are substituted by two protecting groups, a nitrogen-containing group in which one hydrogen atom of a secondary amine is substituted by one protecting group, or a tertiary amino group include N,N-bis(trimethylsilyl)aminopropyltrimethoxysilane, N,N-bis(trimethylsilyl)aminopropylmethyldiethoxysilane, N,N',N'-tris(trimethylsilyl)-N-(2-aminoethyl)-3-aminopropyltriethoxysilane, and 3-(4-trimethylsilyl-1-piperazino)propylmethyldimethoxysilane.

Examples of compounds containing an alkoxysilyl group and an imino group or a pyridyl group include N-(1,3-dimethylbutylidene)-3-(triethoxysilyl)-1-propaneamine, N-(1-methylpropylidene)-3-(triethoxysilyl)-1-propaneamine, N-(4-N,N-dimethylaminobenzylidene)-3-(triethoxysilyl)-1-propaneamine, N-(cyclohexylidene)-3-(triethoxysilyl)-1-propaneamine, and trimethoxysilyl, methyldiethoxysilyl, or ethyldimethoxysilyl compounds corresponding to the foregoing triethoxysilyl compounds, N-(3-trimethoxysilylpropyl)-4,5-dihydroimidazole, N-(3-triethoxysilylpropyl)-4,5-dihydroimidazole, N-(3-trimethoxysilylpropyl)-4,5-imidazole, N-(3-triethoxysilylpropyl)-4,5-imidazole, 3-hexamethyleneiminopropyltrimethoxysilane, 3-hexamethyleneiminopropylmethyldimethoxysilane, and the foregoing compounds whose alkyl group and alkanediyl group are replaced with a C1-C6 alkyl group and a C1-C6 alkanediyl group, respectively.

Examples of compounds containing an alkoxysilyl group and a phosphorus-containing group in which two hydrogen atoms of a primary phosphino group are substituted by two protecting groups, a phosphorus-containing group in which one hydrogen atom of a secondary phosphino group is substituted by one protecting group, a tertiary phosphino group, or a sulfur-containing group in which one hydrogen atom of a thiol group is substituted by one protecting group include P,P-bis(trimethylsilyl)phosphinopropylmethyldimethoxysilane, P,P-bis(trimethylsilyl)phosphinopropyltrimethoxysilane, 3-dimethylphosphinopropyltrimethoxysilane, 3-dimethylphosphinopropylmethyldimethoxysilane, 3-diphenylphosphinopropyltrimethoxysilane, 3-diphenylphosphinopropyltriethoxysilane, 3-diphenylphosphinopropylmethyldimethoxysilane, S-trimethylsilylmercaptopropylmethyldimethoxysilane, S-trimethylsilylmercaptopropyltrimethoxysilane, S-trimethylsilylmercaptopropyltriethoxysilane, S-trimethylsilylmercaptopropylmethyldiethoxysilane, and the foregoing compounds whose alkyl group and alkanediyl group are replaced with a C1-C6 alkyl group and a C1-C6 alkanediyl group, respectively. In addition, examples of compounds containing an iso(thio)cyanate group include 3-isocyanatopropyltrimethoxysilane and 3-isocyanatopropyltriethoxysilane.

In the compound (B2-2), the group (x2) is preferably a group that contains a nitrogen atom bound to no active hydrogen. Specific examples of such compounds include:

compounds containing a cyclic ether group, such as epoxy amine compounds, e.g., tetraglycidyl-1,3-bisaminomethylcyclohexane,

compounds containing a (thio)carbonyl group, such as 4-aminoacetophenones, e.g., 4-N,N-dimethylaminobenzophenone; bis(dihydrocarbylaminoalkyl)ketones, e.g., 1,7-bis(methylethylamino)-4-heptanone; dihydrocarbylaminoalkyl (meth)acrylates, e.g., 2-dimethylaminoethyl acrylate; hydrocarbylimidazolidinones, e.g., 1,3-dimethyl-2-imidazolidinone; N-hydrocarbylpyrrolidones, e.g., 1-phenyl-2-pyrrolidone; N-hydrocarbylcaprolactams, e.g., N-methyl-ε-caprolactam; N-dihydrocarbylformamides, e.g., N,N-diethylformamide; N,N-dihydrocarbylacetamides, e.g., N,N-dimethylacetamide; and (meth)acrylamides, e.g., N,N-dimethylacrylamide, and

compounds containing an iso(thio)cyanate group, such as 3-isocyanatopropyltrimethoxysilane.

Examples of the compound (B2-3) include 2,4-tolylene diisocyanate, 2,6-tolylene diisocyanate, diphenylmethane diisocyanate, naphthalene diisocyanate, triphenylmethane triisocyanate, p-phenylene diisocyanate, tris(isocyanatophenyl)thiophosphate, xylene diisocyanate, benzene-1,2,4-triisocyanate, naphthalene-1,2,5,7-tetraisocyanate, and 1,4-phenylene diisothiocyanate.

The compound (B2) is particularly preferably a compound (B2-1) because of its high affinity for silica. When a silane compound (B2-1) is used, for example, silicon tetrachloride or an epoxy-containing compound (e.g., tetraglycidyl-1,3-bisaminomethylcyclohexane) may be used with the silane compound (B2-1) to control the Mooney viscosity of the modified copolymer. All the compounds (B2) mentioned above have the same function in that they allow the resulting modified copolymer to have a modified polymerization terminating terminal. Accordingly, those which are not disclosed in EXAMPLES later can also be used in the present disclosure. A structure represented by the formula (1-1) below is introduced into the polymer terminal by the reaction between the compound of formula (1) and the copolymer to be modified.

$$-\underset{\left(O-R^6\right)_{2-n}}{\overset{R^3_n}{\mathrm{Si}}}-R^5-A^4 \qquad (1\text{-}1)$$

In formula (1-1), $R^6$ represents a hydrogen atom or a hydrocarbyl group, and when two or more $R^6$ groups are present, they may be the same or different. Examples of the hydrocarbyl group for $R^6$ include those listed above for $R^3$ and $R^4$ in formula (1). $A^4$, $R^3$, $R^5$ and n are as defined for $A^1$, $R^3$, $R^5$ and n, respectively, in formula (1).

The terminal modification reaction may be performed as a solution reaction, for example. The solution reaction may be carried out using the solution containing unreacted monomers obtained after completion of the polymerization reaction in the polymerization step, or a solution prepared by isolating the copolymer from the above solution and dissolving it in an appropriate solvent such as cyclohexane. Moreover, the terminal modification reaction may be carried out either batchwise or continuously. Here, the compound (B2) may be added in any manner, such as at one time, in portions, or continuously.

The amount of the compound (B2) used in the terminal modification reaction may be selected appropriately according to the type of compound used in the reaction. The amount of the compound (B2) is preferably 0.1 mole equivalents or more, more preferably 0.3 mole equivalents or more relative to the metal atom of the polymerization initiator involved in the polymerization reaction. With 0.1 mole equivalents or more, the modification reaction can proceed sufficiently, and the dispersibility of silica can be suitably improved.

The temperature of the terminal modification reaction is usually the same as the temperature of the polymerization reaction, and is preferably -20 to 150°C, more preferably 0 to 120°C, particularly preferably 20 to 100°C. If the temperature of the modification reaction is low, the viscosity of the modified copolymer tends to increase, while if the temperature of the modification reaction is high, the polymerization active terminal can be easily deactivated. The duration of the modification reaction is preferably one minute to five hours, more preferably two minutes to one hour.

(Termination of reaction)

The anionic polymerization may be terminated by addition of a reaction terminator usually used in this field. Examples of the reaction terminator include polar solvents containing active protons such as acetic acid and alcohols (e.g., methanol, ethanol, isopropanol), and mixtures thereof, as well as mixtures of the foregoing polar solvents and non-polar solvents such as hexane or cyclohexane. Usually, the amount of these reaction terminators to be added is sufficient when it is about equal to or twice the molar amount of the initiator(s) for anionic polymerization.

(Coupling)

In the method for producing the copolymer, a coupling agent may be added to the hydrocarbon solution of the copolymer at any time from the initiation of the polymerization of monomers until the polymer is recovered as described later. The coupling agent may be a compound represented by the following formula (2-1):

$$R^1{}_aML_{4-a} \qquad (2\text{-}1)$$

wherein $R^1$ represents an alkyl group, an alkenyl group, a cycloalkenyl group, or an aryl group; M represents a silicon atom or a tin atom; L represents a halogen atom or a hydrocarbyloxy group; and a represents an integer of 0 to 2.

Examples of the coupling agent of formula (2-1) include silicon tetrachloride, methyltrichlorosilane, dimethyldichlorosilane, trimethylchlorosilane, tin tetrachloride, methyltrichlorotin, dimethyldichlorotin, trimethylchlorotin, tetramethoxysilane, methyltrimethoxysilane, dimethoxydimethylsilane, methyltriethoxysilane, ethyltrimethoxysilane, dimethoxydiethylsilane, diethoxydimethylsilane, tetraethoxysilane, ethyltriethoxysilane, and diethoxydiethylsilane.

To enhance the processability of the polymer, the amount of the coupling agent(s) to be added is preferably 0.03 mol or more, more preferably 0.05 mol or more, per mol of the alkali metal derived from the alkali metal catalyst. To enhance fuel economy, the amount is also preferably 0.4 mol or less, more preferably 0.3 mol or less.

(Hydrogenation method)

In a method for producing a hydrogenated copolymer, the copolymer described above is hydrogenated to obtain a hydrogenated copolymer having a degree of hydrogenation of 75 mol% or higher. The hydrogenation of the copolymer advantageously improves heat resistance.

The hydrogenation may be performed using any method and any reaction condition, including known methods and known conditions. Usually, the hydrogenation is performed at 20 to 150°C under 0.1 to 10 MPa hydrogen pressure in the presence of a hydrogenation catalyst. The degree of hydrogenation may be set as desired by changing, for example, the amount of the hydrogenation catalyst, the hydrogen pressure during the hydrogenation reaction, or the duration of the reaction. The hydrogenation catalyst used may be usually a compound containing any of the metals of groups 4 to 11 of the periodic table. For example, compounds containing any of the atoms: Ti, V, Co, Ni, Zr, Ru, Rh, Pd, Hf, Re, and Pt can be used as hydrogenation catalysts. More specific examples of the hydrogenation catalysts include metallocene compounds containing Ti, Zr, Hf, Co, Ni, Pd, Pt, Ru, Rh, Re, or other metals; supported heterogeneous catalysts in which a metal such as Pd, Ni, Pt, Rh, or Ru is supported on a carrier such as carbon, silica, alumina, or diatomaceous earth; homogeneous Ziegler catalysts in which an organic salt or acetylacetone salt of a metal element such as Ni or Co is combined with a reducing agent such as an organoaluminum; organometallic compounds or complexes containing Ru, Rh, or other metals; and fullerenes and carbon nanotubes in which hydrogen is stored.

Among these, metallocene compounds containing Ti, Zr, Hf, Co, or Ni are preferred because they allow the hydrogenation reaction to be carried out in a homogeneous system in an inert organic solvent. More preferred are metallocene compounds containing Ti, Zr, or Hf. In particular, hydrogenation catalysts obtained by reaction of titanocene compounds and alkyllithiums are preferred because such catalysts are inexpensive and industrially very useful. Specific examples include hydrogenation catalysts described in, for example, JP H1-275605 A, JP H5-271326 A, JP H5-271325 A, JP H5-222115 A, JP H11-292924 A, JP 2000-37632 A, JP S59-133203 A, JP S63-5401 A, JP S62-218403 A, JP H7-90017 A, JP S43-19960 B, and JP S47-40473 B. Each of these hydrogenation catalysts may be used alone, or two or more of these may be used in combination.

When the cap tread rubber composition contains one or more hydrogenated copolymers described above, the amount of the hydrogenated copolymers based on 100% by mass of the rubber components is preferably 70% by mass or less, more preferably 60% by mass or less, but is preferably 25% by mass or more, more preferably 30% by mass or more. When the amount is within the range indicated above, the advantageous effect tends to be better achieved.

Examples of rubber components other than the hydrogenated copolymers that may be used in the cap tread rubber composition include diene rubbers, such as natural rubbers (NR), polyisoprene rubbers (IR), styrene-butadiene rubbers (SBR), polybutadiene rubbers (BR), acrylonitrile-butadiene rubbers (NBR), and styrene-isoprene-butadiene copolymer rubbers (SIBR). Each of these may be used alone, or two or more of these may be used in combination. To easily prepare a rubber composition having a small thermal aging-induced hardness change, SBR and BR are preferred among these, with BR being more preferred.

Any SBR may be used, including for example emulsion-polymerized styrene-butadiene rubbers (E-SBR) and solution-polymerized styrene-butadiene rubbers (S-SBR). Usable commercial products are available from Sumitomo Chemical Co., Ltd., JSR Corporation, Asahi Kasei Corporation, Zeon Corporation, etc. Each of these may be used alone, or two or more of these may be used in combination.

The SBR may be either unmodified or modified SBR. The modified SBR may be any SBR having a functional group interactive with filler such as silica. Examples include chain end-modified SBR obtained by modifying at least one chain end of SBR with a compound (modifier) containing the functional group (i.e., chain end-modified SBR terminated with the functional group); backbone-modified SBR having the functional group in the backbone; backbone- and chain end-modified SBR having the functional group in both the backbone and chain end (e.g., backbone- and chain end-modified SBR in which the backbone has the functional group, and at least one chain end is modified with the modifier); and chain end-modified SBR having into which a hydroxy group or an epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups) .

Specific examples of the compound (modifier) containing the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

Other examples of the modifier include: polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl meta-xylenediamine, tetraglycidylaminodiphenylmethane, tetraglycidyl-p-phenylenediamine, diglyci-

dylaminomethylcyclohexane, and tetraglycidyl-1,3-bisaminomethylcyclohexane;

amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis(glycidyloxypropyl)-tetramethyldisiloxane and (3-glycidyloxypropyl)-pentamethyldisiloxane;

sulfide group-containing silane compounds such as (trimethylsilyl) [3-(trimethoxysilyl)propyl]sulfide, (trimethylsilyl) [3-(triethoxysilyl)propyl]sulfide, (trimethylsilyl) [3-(tripropoxysilyl)propyl]sulfide, (trimethylsilyl) [3-(tributoxysilyl)propyl]sulfide, (trimethylsilyl) [3-(methyldimethoxysilyl)propyl]sulfide, (trimethylsilyl) [3-(methyldiethoxysilyl)propyl]sulfide, (trimethylsilyl) [3-(methyldipropoxysilyl)propyl]sulfide, and (trimethylsilyl) [3-(methyldibutoxysilyl)propyl]sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds containing amino and/or substituted amino groups such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing amino and/or substituted amino groups such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurilolactam, N-vinyl-ω-laurilolactam, N-methyl-β-propiolactam, and N-phenyl-β-propiolactam; and

N,N-bis(2,3-epoxypropoxy)aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethylurea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone.

The styrene content of the SBR is preferably 20% by mass or higher, more preferably 35% by mass or higher, but is preferably 60% by mass or lower, more preferably 50% by mass or lower. When the styrene content is within the range indicated above, the advantageous effect tends to be better achieved.

The styrene content of the SBR can be measured by $^1$H-NMR analysis.

The vinyl content of the SBR is preferably 15% by mass or higher, more preferably 30% by mass or higher, but is preferably 50% by mass or lower, more preferably 40% by mass or lower. When the vinyl content is within the range indicated above, the advantageous effect tends to be better achieved.

The vinyl content (1,2-butadiene unit content) of the SBR can be measured by infrared absorption spectrometry.

The weight average molecular weight (Mw) of the SBR is preferably 600,000 or more, more preferably 750,000 or more, but is preferably 2,000,000 or less, more preferably 1,500,000 or less, still more preferably 1,200,000 or less, particularly preferably 1,000,000 or less. When the Mw is within the range indicated above, the advantageous effect tends to be better achieved.

To provide good processability while increasing the molecular weight, oil extended SBR is preferred.

The amount of the SBR, if present, based on 100% by mass of the rubber components in the cap tread rubber composition is preferably 10% by mass or more, more preferably 20% by mass or more, but is preferably 70% by mass or less, more preferably 60% by mass or less. When the amount is within the range indicated above, the advantageous effect tends to be better achieved.

Any BR may be used, including high-cis BR, low-cis BR, and syndiotactic polybutadiene crystal-containing BR. The BR may be modified BR into which the above-described functional group has been introduced. Usable commercial products are available from Ube Industries, Ltd., JSR Corporation, Asahi Kasei Corporation, Zeon Corporation, etc. These may be used alone or in combinations of two or more.

The cis content of the BR is preferably 40% by mass or higher, more preferably 95% by mass or higher, still more preferably 97% by mass or higher. The upper limit is not limited. When the cis content is within the range indicated above, the advantageous effect tends to be better achieved.

The cis content of the BR can be measured by infrared absorption spectrometry.

The amount of the BR, if present, based on 100% by mass of the rubber components in the cap tread rubber composition is preferably 5% by mass or more, more preferably 10% by mass or more, still more preferably 20% by mass or more, particularly preferably 30% by mass or more, but is preferably 50% by mass or less, more preferably 40% by mass or less. When the amount is within the range indicated above, the advantageous effect tends to be better achieved.

The cap tread rubber composition may contain carbon black.

Any carbon black may be used, and examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. These may be used alone or in combinations of two or more.

The nitrogen adsorption specific surface area ($N_2SA$) of the carbon black is preferably 75 $m^2/g$ or more, more preferably 95 $m^2/g$ or more, but is preferably 120 $m^2/g$ or less, more preferably 100 $m^2/g$ or less. When the $N_2SA$ is within the range indicated above, the advantageous effect tends to be better achieved.

The $N_2SA$ of the carbon black can be measured in accordance with JIS K6217-2:2001.

The amount of the carbon black, if present, per 100 parts by mass of the rubber components in the cap tread rubber composition is preferably 5 parts by mass or more, more preferably 8 parts by mass or more, still more preferably 10 parts by mass or more, but is preferably 30 parts by mass or less, more preferably 20 parts by mass or less. When the amount is within the range indicated above, the advantageous effect of the present disclosure can be more suitably achieved.

The cap tread rubber composition may contain silica.

Examples of the silica include dry silica (anhydrous silicic acid) and wet silica (hydrous silicic acid). Wet silica is preferred because it has a large number of silanol groups. Usable commercial products are available from Evonik-Degussa, Tosoh Silica Corporation, Solvay Japan, Tokuyama Corporation, etc. Each of these may be used alone, or two or more of these may be used in combination.

The nitrogen adsorption specific surface area ($N_2SA$) of the silica is preferably 100 $m^2/g$ or more, more preferably 150 $m^2/g$ or more, but is preferably 250 $m^2/g$ or less, more preferably 220 $m^2/g$ or less, still more preferably 200 $m^2/g$ or less. When the $N_2SA$ is within the range indicated above, the advantageous effect tends to be better achieved.

The nitrogen adsorption specific surface area of the silica is measured by a BET method in accordance with ASTM D3037-81.

The amount of the silica, if present, per 100 parts by mass of the rubber components in the cap tread rubber composition is preferably 60 parts by mass or more, more preferably 80 parts by mass or more, but is preferably 120 parts by mass or less, more preferably 100 parts by mass or less. When the amount is within the range indicated above, the advantageous effect tends to be better achieved.

The cap tread rubber composition which contains silica preferably further contains one or more silane coupling agents.

Non-limiting examples of the silane coupling agents include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of the silane coupling agents, if present, per 100 parts by mass of the silica in the cap tread rubber composition is preferably 1 part by mass or more, more preferably 3 parts by mass or more, but is preferably 12 parts by mass or less, more preferably 8 parts by mass or less. When the amount is within the range indicated above, the advantageous effect tends to be better achieved.

The cap tread rubber composition may contain one or more adhesive resins.

Examples of the adhesive resins include those commonly used in the tire industry, including aromatic hydrocarbon resins such as phenol resins, alkylphenol resins, terpene resins, coumarone resins, indene resins, coumarone-indene resins, styrene resins, acrylic resins, rosin resins, and dicyclopentadiene resins (DCPD resins); aliphatic hydrocarbon resins such as C5 resins, C8 resins, C9 resins, and C5/C9 resins; and hydrogenated products of the foregoing resins. Usable commercial products are available from Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., JXTG Nippon Oil & Energy Corporation, Zeon Corporation, Harima Chemicals Group, Inc., Toagosei Co., Ltd., Arakawa Chemical Industries, Ltd., Taoka Chemical Co., Ltd., etc. These may be used

alone or in combinations of two or more.

The amount of the adhesive resins, if present, per 100 parts by mass of the rubber components in the cap tread rubber composition is preferably 1 part by mass or more, more preferably 5 parts by mass or more, but is preferably 30 parts by mass or less, more preferably 20 parts by mass or less. When the amount is within the range indicated above, the advantageous effect tends to be better achieved.

The cap tread rubber composition may contain one or more waxes.

Non-limiting examples of the waxes include petroleum waxes such as paraffin waxes and microcrystalline waxes; naturally-occurring waxes such as plant waxes and animal waxes; and synthetic waxes such as polymers of ethylene, propylene, or other similar monomers. Usable commercial products are available from Ouchi Shinko Chemical Industrial Co., Ltd., Nippon Seiro Co., Ltd., Seiko Chemical Co., Ltd., etc. Each of these may be used alone, or two or more of these may be used in combination.

The amount of the waxes, if present, per 100 parts by mass of the rubber components in the cap tread rubber composition is preferably 0.5 parts by mass or more, more preferably 1 part by mass or more, but is preferably 5 parts by mass or less, more preferably 3 parts by mass or less. When the amount is within the range indicated above, the advantageous effect tends to be better achieved.

The cap tread rubber composition may contain one or more oils.

Examples of the oils include process oils, plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., JXTG Nippon Oil & Energy Corporation, Olisoy, H&R, Hokoku Corporation, Showa Shell Sekiyu K.K., Fuji Kosan Co., Ltd., etc. Each of these may be used alone, or two or more of these may be used in combination.

The amount of the oils, if present, per 100 parts by mass of the rubber components in the cap tread rubber composition is preferably 10 parts by mass or more, more preferably 20 parts by mass or more, still more preferably 30 parts by mass or more, but is preferably 60 parts by mass or less, more preferably 45 parts by mass or less. When the amount is within the range indicated above, the advantageous effect tends to be better achieved.

The cap tread rubber composition may contain one or more antioxidants.

Examples of the antioxidants include naphthylamine antioxidants such as phenyl-α-naphthylamine; diphenylamine antioxidants such as octylated diphenylamine and 4, 4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable commercial products are available from Seiko Chemical Co., Ltd., Sumitomo Chemical Co., Ltd., Ouchi Shinko Chemical Industrial Co., Ltd., Flexsys, etc. Each of these may be used alone, or two or more of these may be used in combination.

The amount of the antioxidants, if present, per 100 parts by mass of the rubber components in the cap tread rubber composition is preferably 0.5 parts by mass or more, more preferably 0.8 parts by mass or more, still more preferably 2 parts by mass or more, particularly preferably 4 parts by mass or more, but is preferably 8 parts by mass or less, more preferably 6 parts by mass or less, still more preferably 5 parts by mass or less. When the amount is within the range indicated above, the advantageous effect tends to be better achieved.

The cap tread rubber composition may contain stearic acid.

The stearic acid may be conventional ones. Usable commercial products are available from NOF Corporation, Kao Corporation, FUJIFILM Wako Pure Chemical Corporation, Chiba Fatty Acid Co., Ltd., etc. Each of these may be used alone, or two or more of these may be used in combination.

The amount of the stearic acid, if present, per 100 parts by mass of the rubber components in the cap tread rubber composition is preferably 1 part by mass or more, more preferably 2 parts by mass or more, but is preferably 10 parts by mass or less, more preferably 5 parts by mass or less. When the amount is within the range indicated above, the advantageous effect tends to be better achieved.

The cap tread rubber composition may contain zinc oxide.

The zinc oxide may be conventional ones. Usable commercial products are available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. Each of these may be used alone, or two or more of these may be used in combination.

The amount of the zinc oxide, if present, per 100 parts by mass of the rubber components in the cap tread rubber composition is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The cap tread rubber composition may contain sulfur.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of the sulfur, if present, per 100 parts by mass of the rubber components in the cap tread rubber composition is preferably 0.5 parts by mass or more, more preferably 1 part by mass or more, but is preferably 5 parts by mass or less, more preferably 3 parts by mass or less, still more preferably 2 parts by mass or less. When the amount is within the range indicated above, the advantageous effect tends to be better achieved.

The cap tread rubber composition may contain one or more vulcanization accelerators.

Examples of the vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., etc. These may be used alone or in combinations of two or more.

The amount of the vulcanization accelerators, if present, per 100 parts by mass of the rubber components in the cap tread rubber composition is preferably 1.5 parts by mass or more, more preferably 2.5 parts by mass or more, still more preferably 3.5 parts by mass or more, but is preferably 8 parts by mass or less, more preferably 5 parts by mass or less. When the amount is within the range indicated above, the advantageous effect tends to be better achieved.

In addition to the above-mentioned components, the cap tread rubber composition may contain other additives commonly used in the tire industry, such as organic peroxides, and fillers such as calcium carbonate, talc, alumina, clay, aluminum hydroxide, and mica. The amount of these additives per 100 parts by mass of the rubber components is preferably 0.1 to 200 parts by mass.

The cap tread rubber composition may be prepared, for example, by kneading the above-mentioned components in a rubber kneading machine such as an open roll mill or Banbury mixer, and vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 85 to 110°C. The composition obtained after kneading vulcanizing agents and vulcanization accelerators is usually vulcanized by, for example, press vulcanization. The vulcanization temperature is usually 140 to 190°C, preferably 150 to 185°C. The vulcanization time is usually five to 15 minutes.

<Base tread rubber composition>

The same or similar chemicals as described for the cap tread rubber composition may be used in the base tread rubber composition.

As the rubber component(s) in the base tread rubber composition, the above-described hydrogenated copolymers, NR, and BR are preferred, with NR or BR being more preferred.

The amount of the hydrogenated copolymers based on 100% by mass of the rubber components in the base tread rubber composition is preferably 50% by mass or less, more preferably 30% by mass or less, still more preferably 10% by mass or less, and may be 0% by mass. When the amount is within the range indicated above, the advantageous effect tends to be better achieved.

Examples of the NR include those commonly used in the tire industry, such as SIR20, RSS#3, and TSR20. Each of these may be used alone, or two or more of these may be used in combination.

The amount of the NR, if present, based on 100% by mass of the rubber components in the base tread rubber composition is preferably 40% by mass or more, more preferably 60% by mass or more, but is preferably 90% by mass or less, more preferably 80% by mass or less. When the amount is within the range indicated above, the advantageous effect tends to be better achieved.

The amount of the BR, if present, based on 100% by mass of the rubber components in the base tread rubber composition is preferably 10% by mass or more, more preferably 20% by mass or more, but is preferably 60% by mass or less, more preferably 40% by mass or less. When the amount is within the range indicated above, the advantageous effect tends to be better achieved.

When the base tread rubber composition contains carbon black, the amount of the carbon black per 100 parts by mass of the rubber components is preferably 10 parts by mass or more, more preferably 20 parts by mass or more, but is preferably 40 parts by mass or less, more preferably 30 parts by mass or less. When the amount is within the range indicated above, the advantageous effect of the present disclosure can be more suitably achieved.

The nitrogen adsorption specific surface area ($N_2SA$) of the carbon black is preferably 50 $m^2/g$ or more, more

preferably 70 $m^2/g$ or more, but is preferably 90 $m^2/g$ or less, more preferably 80 $m^2/g$ or less. When the $N_2SA$ is within the range indicated above, the advantageous effect tends to be better achieved.

When the base tread rubber composition contains silica, the amount of the silica per 100 parts by mass of the rubber components is preferably 10 parts by mass or more, more preferably 30 parts by mass or more, but is preferably 80 parts by mass or less, more preferably 50 parts by mass or less. When the amount is within the range indicated above, the advantageous effect tends to be better achieved.

When the base tread rubber composition contains one or more silane coupling agents, the amount of the silane coupling agents per 100 parts by mass of the silica is preferably 1 part by mass or more, more preferably 3 parts by mass or more, but is preferably 12 parts by mass or less, more preferably 8 parts by mass or less. When the amount is within the range indicated above, the advantageous effect tends to be better achieved.

In addition to the above-mentioned components, the base tread rubber composition may contain appropriate additives such as waxes, stearic acid, antioxidants, zinc oxide, sulfur, and vulcanization accelerators.

The base tread rubber composition may be prepared using the method and conditions as described for the cap tread rubber composition.

<Pneumatic tire>

The pneumatic tire of the present disclosure can be produced from the cap tread rubber composition and the base tread rubber composition by usual methods.

Specifically, the unvulcanized cap and base tread rubber compositions may be extruded into the shapes of a cap tread and a base tread, respectively, and then assembled with other tire components and formed in a usual manner in a tire building machine to build an unvulcanized tire. The unvulcanized tire may be heat-pressurized in a vulcanizer to obtain a tire including a tread portion that includes a stack of a cap tread and a base tread.

The hardness of the cap tread rubber composition in the pneumatic tire is preferably 55 or higher, more preferably 60 or higher, still more preferably 65 or higher, but is preferably 75 or lower, more preferably 70 or lower, still more preferably 68 or lower. The hardness of the vulcanized base tread rubber composition is preferably 55 or higher, more preferably 60 or higher, still more preferably 65 or higher, but is preferably 75 or lower, more preferably 70 or lower, still more preferably 68 or lower. When the hardness is within the range indicated above, the advantageous effect tends to be better achieved.

The difference between the hardness of the vulcanized cap tread rubber composition and the hardness of the vulcanized base tread rubber composition is preferably 6 or less, more preferably 5 or less, still more preferably 4 or less, particularly preferably 1 or less, and may be 0 (the hardnesses are substantially the same). When the difference is within the range indicated above, the advantageous effect tends to be better achieved.

The hardness of the rubber compositions can be controlled, for example: by varying the amount of fillers such as silica or carbon black, the amount of sulfur, the amount of vulcanization accelerators, or the amount of softeners such as oils; or using fillers having different particle sizes. Specifically, the hardness after vulcanization may be increased, for example, by increasing the amount of fillers, sulfur, or vulcanization accelerators, or reducing the amount of softeners, or using fillers having small particle sizes. The hardness can be controlled according to such tendencies.

The pneumatic tire may be used as a tire for passenger vehicles, trucks and buses, or two-wheeled vehicles, or a racing tire, for example. The pneumatic tire is especially suitable for passenger vehicles.

EXAMPLES

The present disclosure is specifically described with reference to, but not limited to, examples below.

<Synthesis of copolymer>

(Synthesis Example 1 (Synthesis of copolymer (1): modified SBR with degree of hydrogenation of 0 mol%))

A sufficiently nitrogen-purged heat-resistant reaction vessel was charged with 2,000 mL of n-hexane, 60 g of styrene, 140 g of 1,3-butadiene, 0.93 g of N,N,N',N'-tetramethylethylenediamine (TMEDA), and 0.45 mmol of n-butyllithium, followed by stirring at 50°C for five hours to perform a polymerization reaction. Subsequently, 0.15 mol of a modifier (N,N-bis(trimethylsilyl)aminopropylmethyldiethoxysilane) was added and then stirred at 0°C for one hour. Then, the polymerization reaction was terminated by adding methanol. An amount of 1 g of 2,6-di-tert-butyl-p-cresol was added to the reaction solution, followed by purification by reprecipitation to give copolymer (1). The copolymer (1) had a weight average molecular weight (Mw) of 490,000 and a styrene content of 30% by mass.

(Synthesis Example 2 (Synthesis of copolymer (2): hydrogenated modified SBR with degree of hydrogenation of 80 mol%))

Copolymer (2) was prepared by the same procedure as for copolymer (1), except that the obtained polymer was hydrogenated. Specifically, after the polymerization conversion reaction and the modification reaction described for copolymer (1), the polymerization reaction was not terminated by adding an alcohol, but instead the reaction solution was then stirred for 20 minutes while supplying hydrogen gas at a pressure of 0.4 MPa gauge to react the unreacted polymer terminal lithium with hydrogen into lithium hydride. Hydrogenation was performed using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature and the hydrogen pressure was returned to an ordinary pressure. Thereafter, the reaction solution was drawn from the reaction vessel and introduced into water with stirring. Then, the solvent was removed by steam stripping to obtain copolymer (2). The copolymer (2) had a degree of hydrogenation of 80 mol%, a weight average molecular weight (Mw) of 480,000, and a styrene content of 30% by mass.

(Synthesis Example 3 (Synthesis of copolymer (3): hydrogenated modified SBR with degree of hydrogenation of 90 mol%))

Copolymer (3) was prepared by the same procedure as for copolymer (2), except that the cumulative amount of absorbed hydrogen was adjusted to correspond to the target degree of hydrogenation. The copolymer (3) had a degree of hydrogenation of 90 mol%, a weight average molecular weight (Mw) of 480,000, and a styrene content of 30% by mass.

(Synthesis Example 4 (Synthesis of copolymer (4): hydrogenated modified SBR with degree of hydrogenation of 95 mol%))

Copolymer (4) was prepared by the same procedure as for copolymer (2), except that the cumulative amount of absorbed hydrogen was adjusted to correspond to the target degree of hydrogenation. The copolymer (4) had a degree of hydrogenation of 95 mol%, a weight average molecular weight (Mw) of 450,000, and a styrene content of 30% by mass.

<Synthesis of SBR>

Two autoclave reactors each having an inner volume of 10 liters and equipped with an inlet at the bottom, an outlet at the head, a stirrer, and a jacket were connected in series. Butadiene, styrene, and cyclohexane were mixed at a predetermined ratio. The mixed solution was allowed to pass through a dehydration column packed with activated alumina, and then mixed with n-butyllithium in a static mixer to remove impurities. Then, the mixture was continuously fed from the bottom of the first reactor, and 2,2-bis(2-oxolanyl)propane as a polar substance and n-butyllithium as a polymerization initiator were each continuously fed from the bottom of the first reactor at a predetermined rate. The temperature inside the reactor was maintained at 95°C. The polymer solution was continuously drawn from the head of the reactor and fed to the second reactor. While the temperature of the second reactor was maintained at 95°C, a mixture of tetraglycidyl-1,3-bisaminomethylcyclohexane (monomer) and an oligomer component thereof as a modifier was continuously added as a 1,000-fold dilution in cyclohexane at a predetermined rate to perform a modification reaction. The resulting polymer solution was continuously drawn from the reactor and an antioxidant was continuously added in a static mixer. The resulting polymer solution was further mixed with 25 parts by mass of VivaTec 400 (TDAE oil available from H&R) per 100 parts by mass of the polymer, and then the solvent was removed to obtain a target SBR (oil extended modified SBR).

<Synthesis of BR (2)>

A nitrogen-purged autoclave reactor was charged with hexane, 1,3-butadiene, tetrahydrofuran, and ethylene glycol diethyl ether. Next, a solution of n-butyllithium in cyclohexane was introduced to initiate polymerization.

1,3-Butadiene was polymerized for three hours at a stirring rate of 130 rpm and a temperature inside the reactor of 65°C while continuously feeding the monomer into the reactor. Then, the resulting polymer solution was stirred at a stirring rate of 130 rpm, and 3-dimethylaminopropyltrimethoxysilane was added, followed by reaction for 15 minutes. After completion of the polymerization reaction, 2,6-di-tert-butyl-p-cresol was added. Thereafter, the solvent was removed by steam stripping, and the product was dried on hot rolls adjusted at 110°C to obtain BR (2) (modified BR).

The chemicals used in the examples and comparative examples are described below.

<Chemicals used in cap tread rubber composition (Table 1)>

Copolymers (1) to (4): copolymers synthesized as above
SBR: SBR synthesized as above (styrene content: 38% by mass, vinyl content: 39% by mass, Mw: 800,000, Tg: -25°C
BR (1): Ubepol BR150B (cis content: 97% by mass) available from Ube Industries, Ltd.
Carbon black (1): Diablack N339 ($N_2SA$: 96 $m^2/g$) available from Mitsubishi Chemical Corporation
Silica: ULTRASIL VN3 ($N_2SA$: 180 $m^2/g$) available from Evonik
Silane coupling agent: Si69 (bis(3-triethoxysilylpropyl)tetrasulfide) available from Evonik
Oil: VivaTec 400 (TDAE oil) available from H&R
Stearic acid: stearic acid beads "TSUBAKI" available from NOF Corporation
Zinc oxide: zinc oxide #1 available from Mitsui Mining & Smelting Co., Ltd.
Antioxidant: Antigene 3C available from Sumitomo Chemical Co., Ltd.
Wax: Sunnoc N available from Ouchi Shinko Chemical Industrial Co., Ltd.
Sulfur: powdered sulfur available from Tsurumi Chemical Industry Co., Ltd.
Vulcanization accelerator TBBS: NOCCELER NS (N-tert-butyl-2-benzothiazylsulfenamide, TBBS) available from Ouchi Shinko Chemical Industrial Co., Ltd.
Vulcanization accelerator DPG: NOCCELER D (N,N'-diphenylguanidine, DPG) available from Ouchi Shinko Chemical Industrial Co., Ltd.

<Chemicals used in base tread rubber composition (Table 2)>

NR: TSR20
BR (1): Ubepol BR150B (cis content: 97% by mass) available from Ube Industries, Ltd.
BR (2): BR synthesized as above (cis content: 40% by mass)
Carbon black (2): Shoblack N330 ($N_2SA$: 75 $m^2/g$) available from Cabot Japan K.K.
Silica: ULTRASIL VN3 ($N_2SA$: 180 $m^2/g$) available from Evonik
Silane coupling agent: Si69 (bis(3-triethoxysilylpropyl)tetrasulfide) available from Evonik
Oil: VivaTec 400 (TDAE oil) available from H&R
Stearic acid: stearic acid beads "TSUBAKI" available from NOF Corporation
Zinc oxide: zinc oxide #1 available from Mitsui Mining & Smelting Co., Ltd.
Antioxidant: Antigene 3C available from Sumitomo Chemical Co., Ltd.
Wax: Sunnoc N available from Ouchi Shinko Chemical Industrial Co., Ltd.
Sulfur: powdered sulfur available from Tsurumi Chemical Industry Co., Ltd.
Vulcanization accelerator TBBS: NOCCELER NS (N-tert-butyl-2-benzothiazylsulfenamide, TBBS) available from Ouchi Shinko Chemical Industrial Co., Ltd.
Vulcanization accelerator CBS: NOCCELER CZ (N-cyclohexyl-2-benzothiazolylsulfenamide, CBS) available from Ouchi Shinko Chemical Industrial Co., Ltd.

<Examples and comparative examples>

(Preparation of cap tread rubber composition)

According to each formulation shown in Table 1, the materials other than the sulfur and vulcanization accelerators were kneaded for five minutes at 150°C using a 1.7 L Banbury mixer (Kobe Steel, Ltd.) to give a kneaded mixture. Next, the sulfur and vulcanization accelerators were added to the kneaded mixture, followed by kneading for five minutes at 80°C using an open roll mill to give an unvulcanized cap tread rubber composition.
The unvulcanized cap tread rubber composition was press-vulcanized for 20 minutes at 170°C in a 0.5 mm-thick die to obtain a cap tread rubber composition.
In Table 1, the rubber content of the oil extended rubber, if used, is indicated in the rubber column, while the oil content thereof is added to the oil column.

(Preparation of base tread rubber composition)

According to each formulation shown in Table 2, the materials other than the sulfur and vulcanization accelerators

were kneaded for five minutes at 150°C using a 1.7 L Banbury mixer (Kobe Steel, Ltd.) to give a kneaded mixture. Next, the sulfur and vulcanization accelerators were added to the kneaded mixture, followed by kneading for five minutes at 80°C using an open roll mill to give an unvulcanized base tread rubber composition.

The unvulcanized base tread rubber composition was press-vulcanized for 20 minutes at 170°C in a 0.5 mm-thick die to obtain a base tread rubber composition.

(Preparation of test tire)

The unvulcanized cap tread rubber compositions prepared as above were each formed into a cap tread shape, while the unvulcanized base tread rubber compositions prepared as above were each formed into a base tread shape. Then, they were assembled with other tire components in a tire building machine to build an unvulcanized tire, followed by vulcanization at 170°C for 10 minutes to obtain a test tire (size: 215/55R17).

(Hardness)

The hardness of the cap and base tread rubber compositions were measured at 25°C using a type A durometer in accordance with "Rubber, vulcanized or thermoplastic -Determination of hardness- Part 3: Durometer method" set forth in JIS K6253-3 (2012). The cap tread rubber compositions were again measured after they were thermally treated by allowing them to stand in an oven at a temperature of 90°C and an oxygen concentration of 20% for 336 hours. Then, the thermal aging-induced hardness change was calculated. Table 1 shows the results.

(Adhesive strength between cap and base tread rubber compositions (MPa))

Strip-shaped samples were prepared by sandwiching a PET film having a 1 cm square hole between a 2 mm-thick sheet of each unvulcanized cap tread rubber composition and a 2 mm-thick sheet of each unvulcanized base tread rubber composition, and vulcanizing the stack at 170°C for 12 minutes to allow the sheets to adhere only at the hole in the PET film. The samples were subjected to a peeling test in accordance with JIS K6256-1:2013 at a tensile rate of 50 mm/min and a temperature of 23°C to measure the adhesive strength (MPa). Table 1 shows the results.

This test may be performed using as a sample a stack of cap and base treads cut out from a tire. In this case, the same or similar results will be obtained.

(High speed durability index)

The test tires assembled with a rim (17×7.00JJ) and inflated to an internal pressure of 300 kPa were subjected to a step speed test using a drum tester in accordance with the load/speed performance test stipulated by ECE30. In the test, the running speed of the tires was successively increased while the speed and time at which they broke were measured. The results are expressed as an index relative to Comparative Example 1 (= 100). A higher index indicates better durability (high speed durability).

(Ozone resistance)

In accordance with JIS K 6259:2015 "Rubber, vulcanized or thermoplastic -- Determination of ozone resistance", the test tires were run for 30,000 km in a room controlled at a temperature of 40°C and an ozone concentration of 50 ppm and then visually observed for the number and depth of cracks on the cap tread surface. The results were evaluated using the criteria below. A higher score indicates better ozone resistance. Scores of 100 or higher are considered acceptable.

120: No cracks with no depth, Excellent
110: Very few cracks with almost no depth, Good
100: Small number of cracks with low depth
90: Moderate number of cracks with moderate depth
80: Large number of cracks with high depth

[Table 1]

| Cap tread rubber composition | | Comparative Example | | Example | | | | | | | | | | |
|---|---|---|---|---|---|---|---|---|---|---|---|---|---|---|
| | | 1 | 2 | 1 | 2 | 3 | 4 | 5 | 6 | 7 | 8 * | 9 * | 10* | 11* |
| Formulation (parts by mass) | Copolymer (1) degree of hydrogenation: 0 mol% | 30 | | | | | | | | | 30 | 30 | 10 | 10 |
| | Copolymer (2) degree of hydrogenation: 80 mol% | | | | | 30 | | 60 | | | | | | |
| | Copolymer (3) degree of hydrogenation: 90 mol% | | 30 | 30 | 60 | | | | | 70 | | | | |
| | Copolymer (4) degree of hydrogenation: 95 mol% | | | | | | 30 | | 60 | | | | | |
| | SBR | 50 | 50 | 50 | 20 | 50 | 50 | 20 | 20 | 20 | 50 | 50 | 50 | 50 |
| | BR (1) | 20 | 20 | 20 | 20 | 20 | 20 | 20 | 20 | 10 | 20 | 20 | 40 | 40 |
| | Carbon black (1) | 10 | 10 | 10 | 10 | 10 | 10 | 10 | 10 | 10 | 10 | 10 | 10 | 10 |
| | Silica | 80 | 80 | 80 | 80 | 80 | 80 | 80 | 80 | 80 | 80 | 80 | 80 | 80 |
| | Silane coupling agent | 6.4 | 6.4 | 6.4 | 6.4 | 6.4 | 6.4 | 6.4 | 6.4 | 6.4 | 6.4 | 6.4 | 6.4 | 6.4 |
| | Oil | 37.5 | 37.5 | 37.5 | 37.5 | 37.5 | 37.5 | 37.5 | 37.5 | 37.5 | 35 | 35 | 35 | 35 |
| | Stearic acid | 2 | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 | 2 |
| | Antioxidant | 1 | 1 | 1 | 1 | 1 | 1 | 1 | 1 | 1 | 5 | 5 | 1 | 1 |
| | Wax | 1 | 1 | 1 | 1 | 1 | 1 | 1 | 1 | 1 | 1 | 1 | 1 | 1 |
| | Sulfur | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator TBBS | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator DPG | 2 | 2 | 2 | 2 | 2 | 2 | 2 | 2 | 2 | 2 | 2 | 2 | 2 |
| Hardness (before thermal treatment) | | 65 | 65 | 65 | 65 | 65 | 65 | 65 | 65 | 65 | 65 | 65 | 65 | 65 |
| Hardness (after thermal treatment) | | 71 | 67 | 67 | 66 | 68 | 66 | 67 | 66 | 66 | 67 | 67 | 68 | 68 |
| Thermal aging-induced hardness change | | 6 | 2 | 2 | 1 | 3 | 1 | 2 | 1 | 1 | 2 | 2 | 3 | 3 |
| Base tread rubber composition | | | | | | | | | | | | | | |
| Type | | A | B | A | A | A | A | A | A | A | A | B | A | B |
| Hardness | | 65 | 70 | 65 | 65 | 65 | 65 | 65 | 65 | 65 | 65 | 70 | 65 | 70 |
| Adhesive strength between cap and base tread rubber compositions (MPa) | | 23 | 2 | 18 | 21 | 22 | 15 | 21 | 9 | 9 | 23 | 21 | 22 | 21 |
| High speed durability index | | 100 | 95 | 110 | 115 | 105 | 117 | 122 | 102 | 102 | 102 | 100 | 105 | 102 |
| Ozone resistance | | 90 | 110 | 110 | 120 | 100 | 110 | 110 | 120 | 120 | 110 | 110 | 100 | 100 |

*not according to the invention

[Table 2]

| Base tread rubber composition | | A | B |
|---|---|---|---|
| Formulation (parts by mass) | NR | 75 | 65 |
| | BR (1) | 25 | 17.5 |
| | BR (2) | | 17.5 |
| | Carbon black (2) | 30 | 20 |
| | Silica | | 30 |
| | Silane coupling agent | | 2.4 |
| | Oil | 7 | 2 |
| | Stearic acid | 2 | 2 |
| | Zinc oxide | 3 | 2 |
| | Antioxidant | 2.5 | 3.5 |
| | Wax | 1 | 1.5 |
| | Sulfur | 2.5 | 2.5 |
| | Vulcanization accelerator TBBS | 1 | 2 |
| | Vulcanization accelerator CBS | 0.4 | |

As shown in Tables 1 and 2, excellent durability and excellent ozone resistance were exhibited in the examples in which the adhesive strength between the cap and base tread rubber compositions was 9 MPa or higher, and the cap tread rubber composition had a thermal aging-induced hardness change of 3 or less.

## Claims

**1.** A pneumatic tire, comprising a tread portion comprising a stack of a cap tread and a base tread,

wherein the cap tread and the base tread comprise a cap tread rubber composition and a base tread rubber composition, respectively, and an adhesive strength between the cap and base tread rubber compositions is 9 MPa or higher, when measured in accordance with JIS K6256-1:2013,

wherein the cap tread rubber composition has a thermal aging-induced hardness change defined by the following equation (A) of 3 or less:

(A) Thermal aging-induced hardness change = Hardness after thermal treatment - Hardness before thermal treatment

wherein each Hardness represents a JIS-A hardness at 25°C of the cap tread rubber composition when measured in accordance with "Rubber, vulcanized or thermoplastic -Determination of hardness- Part 3: Durometer method" set forth in JIS K6253-3 (2012), and the thermal treatment involves allowing the cap tread rubber composition to stand at a temperature of 90°C and an oxygen concentration of 20% for 336 hours,
wherein at least one rubber component in the cap tread rubber composition comprises at least one hydrogenated copolymer containing an aromatic vinyl portion which is a structural unit derived from an aromatic vinyl compound, and a conjugated diene portion which is a structural unit derived from a conjugated diene compound and has a degree of hydrogenation of 75 mol% or higher, and
the weight average molecular weight of the hydrogenated copolymer is 200,000 or more, when determined by gel permeation chromatography calibrated with polystyrene standards.

**2.** The pneumatic tire according to claim 1,
wherein the cap tread rubber composition comprises, based on 100% by mass of the at least one rubber component, 25 to 60% by mass of the at least one hydrogenated copolymer.

**3.** The pneumatic tire according to claim 1 or 2,
wherein at least one rubber component in the cap tread rubber composition comprises at least one modified styrene-butadiene rubber.

**Patentansprüche**

**1.** Luftreifen, umfassend einen Laufstreifenabschnitt, der einen Stapel aus einem Decklaufstreifen und einem Basislaufstreifen umfasst,

wobei der Decklaufstreifen und der Basislaufstreifen jeweils eine Decklaufstreifen-Kautschukzusammensetzung und eine Basislaufstreifen-Kautschukzusammensetzung umfassen und eine Haftfestigkeit zwischen der Decklaufstreifen- und der Basislaufstreifen-Kautschukzusammensetzung 9 MPa oder höher beträgt, wenn gemäß JIS K6256-1:2013 gemessen,
wobei die Decklaufstreifen-Kautschukzusammensetzung eine durch thermische Alterung induzierte Härteänderung aufweist, die durch die folgende Gleichung (A) definiert ist und 3 oder weniger beträgt:

(A) Durch thermische Alterung induzierte Härteänderung = Härte nach der thermischen Behandlung - Härte vor der thermischen Behandlung

wobei jede Härte eine JIS-A-Härte bei 25 °C der Decklaufstreifen-Kautschukzusammensetzung darstellt, wenn gemäß "Kautschuk, vulkanisiert oder thermoplastisch - Bestimmung der Härte - Teil 3: Durometer-Verfahren", festgelegt in JIS K6253-3 (2012), gemessen, und die thermische Behandlung beinhaltet, die Decklaufstreifen-Kautschukzusammensetzung 336 Stunden lang bei einer Temperatur von 90 °C und einer Sauerstoffkonzentration von 20 % stehen zu lassen,
wobei mindestens eine Kautschukkomponente in der Decklaufstreifen-Kautschukzusammensetzung mindestens ein hydriertes Copolymer umfasst, das einen aromatischen Vinylanteil, der eine von einer aromatischen Vinylverbindung abgeleitete Struktureinheit ist, und einen konjugierten Dienanteil, der eine von einer konjugierten Dienverbindung abgeleitete Struktureinheit ist und einen Hydrierungsgrad von 75 Mol-% oder höher aufweist, enthält, und
das gewichtsmittlere Molekulargewicht des hydrierten Copolymers 200.000 oder mehr beträgt, wenn mittels Gelpermeationschromatographie bestimmt, die mit Polystyrol-Standards kalibriert ist.

**2.** Luftreifen nach Anspruch 1,
wobei die Decklaufstreifen-Kautschukzusammensetzung, bezogen auf 100 Massen-% der mindestens einen Kautschukkomponente, 25 bis 60 Massen-% des mindestens einen hydrierten Copolymers umfasst.

**3.** Luftreifen nach Anspruch 1 oder 2,
wobei mindestens eine Kautschukkomponente in der Decklaufstreifen-Kautschukzusammensetzung mindestens einen modifizierten Styrol-Butadien-Kautschuk umfasst.

## Revendications

**1.** Pneumatique comprenant une partie de bande de roulement comprenant un empilement d'une bande de roulement de chape et d'une bande de roulement de base,

la bande de roulement de chape et la bande de roulement de base comprenant respectivement une composition de caoutchouc de bande de roulement de chape et une composition de caoutchouc de bande de roulement de base, et une force d'adhérence entre les compositions de caoutchouc de bande de roulement de chape et de base étant de 9 MPa ou plus, lorsqu'elle est mesurée conformément à JIS K6256-1:2013,
la composition de caoutchouc de la bande de roulement de chape présentant une variation de dureté induite par vieillissement thermique, définie par l'équation (A) suivante, de 3 ou moins :

(A) Variation de dureté induite par vieillissement thermique = Dureté après traitement thermique - Dureté avant traitement thermique chaque valeur de dureté correspondant à une dureté JIS-A à 25 °C

de la composition de caoutchouc de bande de roulement de chape, mesurée conformément à « Caoutchouc, vulcanisé ou thermoplastique - Détermination de la dureté - Partie 3 : Méthode au duromètre » énoncée dans la norme JIS K6253-3 (2012), et le traitement thermique impliquant de laisser reposer la composition de caoutchouc de bande de roulement de chape à une température de 90 °C et à une concentration en oxygène de 20 % pendant 336 heures,
au moins un composant de caoutchouc dans la composition de caoutchouc de bande de roulement de chape comprenant au moins un copolymère hydrogéné contenant une partie vinylique aromatique qui est un motif structural dérivé d'un composé vinylique aromatique, et une partie de diène conjugué qui est un motif structural dérivé d'un composé de diène conjugué et présente un degré d'hydrogénation de 75 % en moles ou plus, et la masse moléculaire moyenne en poids du copolymère hydrogéné étant de 200 000 ou plus, lorsqu'elle est déterminée par chromatographie par perméation du gel étalonnée avec des étalons de polystyrène.

**2.** Pneumatique selon la revendication 1,
dans lequel la composition de caoutchouc de bande de roulement de chape comprend, par rapport à 100 % en masse dudit au moins un composant de caoutchouc, de 25 à 60 % en masse dudit au moins un copolymère hydrogéné.

**3.** Pneumatique selon la revendication 1 ou 2,
dans lequel au moins un composant de caoutchouc dans la composition de caoutchouc de bande de roulement de chape comprend au moins un caoutchouc styrène-butadiène modifié.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016039005 A
- EP 3552840 A1
- JP H1275605 A
- JP H5271326 A
- JP H5271325 A
- JP H5222115 A
- JP H11292924 A
- JP 2000037632 A
- JP S59133203 A
- JP S635401 A
- JP S62218403 A
- JP H790017 A
- JP S4319960 B
- JP S4740473 B


### Non-patent literature cited in the description


- Rubber, vulcanized or thermoplastic -Determination of hardness- Part 3: Durometer method. *JIS K6253-3*, 2012